# FASCICULE DE BREVET EUROPEEN

(11) **EP 0 452 162 B1**
(45) Date de publication et mention de la délivrance du brevet: **24.05.1995**
(21) Numéro de dépôt: 91400467.6
(22) Date de dépôt: 21.02.1991
(51) Int. Cl.: G01B 7/04, G01P 3/66

(54) **Moyen de repérage linéaire de longueur, de vitesse ou de positionnement pour article souple de grande longueur**
Lineare Markierungsvorrichtung für Länge, Geschwindigkeit oder Positionierung von flexiblen Artikeln grosser Länge
Linear identification means for length, speed or positioning of flexible article of big length

(30) Priorité: 07.03.1990 FR 9002998
(43) Date de publication de la demande: 16.10.1991
(73) Titulaire: CAOUTCHOUC MANUFACTURE ET PLASTIQUES, F-78000 Versailles (FR)
(72) Inventeur: Marcoz, René, F-63140 Châtel-Guyon (FR)
(74) Mandataire: Peuscet, Jacques

(56) Documents cités:
- EP-A- 0 152 067
- EP-A- 0 270 387
- EP-A- 0 286 820
- GB-A- 2 093 593
- GB-A- 2 183 044
- US-A- 4 316 081
- US-A- 4 718 168
- PATENT ABSTRACTS OF JAPAN vol. 12, no. 313 (P-749)(3160), 25 août 1988 & JP-A-6381205
- PATENT ABSTRACTS OF JAPAN vol. 4, no. 180 (P-40)(662), 12 décembre 1980 & JP-A-55122102
- PATENT ABSTRACTS OF JAPAN vol. 11, no. 52 (P-548)(2499), 18 février 1987 & JP-A-61218901

## Description

L'invention s'applique au domaine du repérage linéaire et du positionnement d'un article souple de grande longueur, par des repères masqués, détectables à l'aide d'un dispositif de lecture électromagnétique associé.

Entre autres applications, l'invention est particulièrement destinée à la mesure de la vitesse de défilement, au repérage de longueurs ou à la détection de la position d'une portion donnée, par exemple l'extrémité, de l'article souple de grande longueur.

De nombreux dispositifs permettant de mesurer la longueur d'un objet réalisé en continu ou le positionnement d'un article dans un environnement ont été décrits, en particulier pour les applications au domaine du textile, pour les articles de grande longueur et dans le domaine de la protection contre le vol, pour les objets individuels. Lesdits dispositifs mettent en jeu, le plus généralement, une détection par moyens mécaniques, par moyens optiques ou par moyens électriques ou électroniques.

Les moyens mécaniques les plus fréquents pour la mesure de longueur utilisent le comptage du nombre de tours du tambour ou du support de l'article souple de grande longueur. De tels dispositifs sont particulièrement employés dans l'industrie textile, par exemple pour la mesure de la longueur des fils de trame dans un métier à tisser comme décrit dans les brevets BE 889 255 de WEEFAUTOM PICANOL ou US 3 915 199 de TEIJIN ou encore JP 61 174 447 de TOYODA AUTOMAT LOOM.

L'emploi de moyens optiques pour la détection du positionnement d'un objet est décrit dans les brevets US 4 700 422 de RUSSELL ou le brevet FR 2 609 417 de VAIRE qui propose un repérage du positionnement d'une tête de curage d'égouts au moyen d'une caméra vidéo, éventuellement stabilisée par des jets latéraux.

Divers moyens électriques, électroniques voire magnétiques ou électromagnétiques sont proposés, par exemple pour la détermination de la longueur d'un tissu élastique, dans le brevet SU 1 121 581 de PETROV, pour la détection d'un défaut dans des cables noyés dans le béton, dans le brevet FR 2 389 139 de SOCOTEC, pour la mise en évidence des vols d'objets dans les magasins, dans le brevet US 3 990 065 de MAGNAVOX ou le brevet FR 2 379 871 de KNOGO et, tout particulièrement, dans l'identification des articles par la lecture d'un "code à barres", de développement récent, faisant l'objet de nombreux brevets, parmi lesquels les brevets FR 2 616 565 de LACROUTS-CAZENAVE ou FR 2 615 983 de SOGEDEC.

Tous les dispositifs de l'art antérieur, relatifs à la détermination de la longueur, de la vitesse ou de la position d'un objet présentent divers inconvénients, tels qu'un manque de précision pour les dispositifs mécaniques, la complexité de l'installation de détection qui est le plus souvent spécialement conçue pour l'application, dans le cas des systèmes de détection électromagnétique, la difficulté d'utilisation des dispositifs optiques dans les lieux peu éclairés ou la nécessité de disposer d'un moyen d'éclairage complémentaire - ce qui n'est pas toujours réalisable sans complexité - et, dans de très nombreuses applications, telles que la lecture du "code à barres" ou des dispositifs antivol, la nécessité de repères apparents dont l'esthétique est discutable et limite l'emploi ou requiert une possibilité d'élimination après détection, comme pour les repères magnétiques apposés sur les articles de confection.

Le moyen de repérage linéaire de longueur, de vitesse ou de positionnement, objet de la présente invention, vise à remédier aux inconvénients des systèmes connus de l'art antérieur en apportant une solution invisible - ne modifiant donc pas l'aspect extérieur de l'article - applicable à des articles souples, de grande longueur, sans modification appréciable ni de leur technique de fabrication, ni de leurs caractéristiques de souplesse et de déformabilité à l'état fini, sans risque d'usure abrasive ou de détérioration chimique par vieillissement atmosphérique ou par le contact avec des liquides agressifs, peu coûteux et ne nécessitant, pour sa lecture, que l'emploi de détecteurs électromagnétiques simples, couramment disponibles dans le commerce.

Le moyen de repérage linéaire de longueur, de vitesse ou de positionnement permet, en outre, d'assurer la logistique intégrée d'une exploitation, lorsqu'il est utilise avec un équipement informatique associé.

Parmi les articles souples de grande longueur auxquels s'applique l'invention, peuvent être cité, à titre d'exemples non limitatifs, les tuyaux, les profilés, les feuilles souples, les fibres optiques et tout autre article souple dont la longueur de fabrication est au moins égale à vingt fois la plus grande dimension en section;
L'invention consiste à placer, au cours de la fabrication de l'article souple de grande longueur, des éléments présentant des caractéristiques magnétiques ou électriques différentes de ce!les des composants de l'article souple de grande longueur, lesdits éléments étant noyés dans l'épaisseur de de la paroi de l'article souple de grande longueur, donc masqués à la vue de l'utilisateur.

Pour simplifier l'exposé de l'invention, lesdits éléments seront désignés par les termes "repères masqués".

L'invention est un moyen de repérage linéaire de longueur, de vitesse ou de positionnement destiné à être détecté, dans un champ magnétique dynamique induit, par repérage d'un message électtrique reçu par des capteurs appropriés. L'invention est caractérisée en ce que :
- ledit moyen de repérage linéaire est constitué de repères masqués, noyés dans l'épaisseur de la paroi d'un article souple de grande longueur, composite et de forme prismatique ou cylindrique,
- lesdits repères masqués présentent une conductibilité magnétique ou électrique au moins dix fois supérieure à celle de l'un quelconque des composants de l'article souple de grande longueur, et en ce que
- le message électrique reçu par lesdits capteurs appropriés est sensiblement indépendant du champ magnétique émis, sous reserve que ledit champ magnétique dépasse une valeur seuil prédéterminée.

Lesdits repères masqués peuvent être matérialisés par des inclusions, continues ou discontinues, noyées dans l'épaisseur de l'article souple de grande longueur, lesdites inclusions devant présenter - par nature ou par formulation sous l'action d'un champ magnétique ou électrique dynamique - une conductibilité magnétique ou électrique très supérieured'environ 10 fois - à celle de l'un quelconque des composants de l'article souple de grande longueur.

Lesdits repères masqués peuvent, également, consister en lacunes, volontairement créées, dans un matériau à conductibilité magnétique ou électrique élevée, tel qu'un métal ou un alliage présentant naturellement de telles propriétés ou susceptible de les acquérir par un traitement approprié, ledit matériau étant noyé dans l'épaisseur de l'article souple de grande longueur.

L'invention, ses variantes et ses applications seront mieux comprises à la lecture de la description accompagnant les dessins dans lesquels :
- la figure 1 est un schéma montrant l'application d'un tuyau constituant l'article souple de grande longueur au nettoyage par hydrocurage des égouts ou des vide-ordures, mettant en oeuvre le repérage linéaire du positionnement ;
- la figure 2 est une vue "en écorché", montrant une variante du moyen de repérage linéaire de longueur, de vitesse ou de positionnement selon l'invention, placé dans l'épaisseur de la paroi d'un tuyau souple, par exemple du type utilisé dans l'application d'hydrocurage décrite en figure 1 ;
- la figure 3 illustre différentes variantes d'application, à des profilés souples, du moyen de repérage linéaire de longueur, de vitesse ou de positionnement, constitué de repères masqués discontinus ;
- la figure 4 représente deux variantes d'application, à un article souple de grande longueur en bande ou en feuille, du moyen de repérage linéaire de longueur, de vitesse ou de positionnement, constitué de repères masqués, également discontinus ;
- la figure 5 propose, dans l'application à des tuyaux souples, deux variantes du moyen de repérage linéaire de longueur, de vitesse ou de positionnement, constituées l'une de repères masqués discontinus, l'autre de repères masqués continus ;
- la figure 6 décrit la possibilité d'utilisation du moyen de repérage linéaire de longueur, de vitesse ou de positionnement, constitué de repères masqués discontinus, disposés dans un article souple de grande longueur tel qu'un tuyau, comportant une armature métallique continue ;
- la figure 7 décrit l'application à un article souple de grande longueur tel qu'un tuyau, d'un ruban en composition polymérique conductrice pour constituer des repères masqués continus ;
- la figure 8 décrit l'application du moyen de repérage linéaire de longueur, de vitesse ou de positionnement à la réalisation d'un article souple de grande longueur, multicouche, dans lequel une au moins des couches internes est un matériau à conductibilité magnétique ou électrique élevée, tel qu'un métal ou alliage, les repères masqués étant alors discontinus et constitués de lacunes créées volontairement ;
- la figure 9 schématise le dispositif de lecture par boucle magnétique du moyen de repérage linéaire de longueur, de vitesse ou de positionnement constitué de repères masqués discontinus ;
- La figure 10 schématise le dispositif de lecture à la défilée, par un capteur électromagnétique plan, du moyen de repérage linéaire de longueur, de vitesse ou de positionnement ;
- la figure 11 schématise l'adaptation du moyen de repérage linéaire de longueur, de vitesse ou de positionnement en logistique d'exploitation, lorsqu'il est utilisé avec une installation informatique associée.

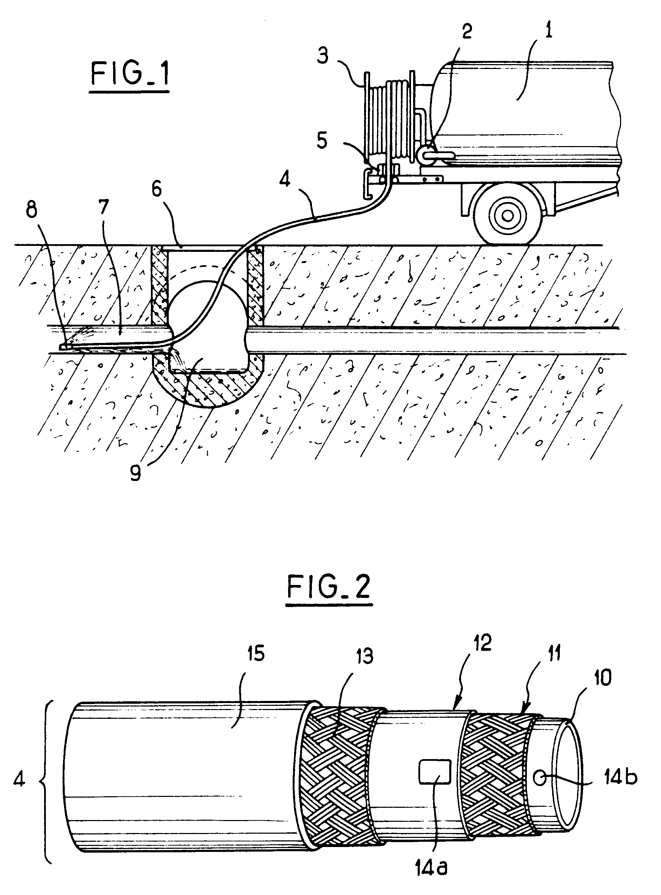

La figure 1 est une vue schématique montrant, dans une application préférentielle au nettoyage par hydrocurage des égouts, les positions relatives d'un camion, du tambour portant le tuyau et de la canalisation, ledit tuyau constituant l'article souple de grande longueur équipé du moyen de repérage linéaire de longueur, de vitesse ou de positionnement.

Un camion, spécialisé dans le nettoyage sous haute pression (environ 100 bars) de canalisations enterrées inaccessibles, comporte une citerne (1) contenant de l'eau, éventuellement additionnée des détergents appropriés, qui est envoyée par un surpresseur (2) vers le moyeu d'un tambour (3) par un joint tournant permettant l'alimentation en liquide sous haute pression d'un tuyau souple (4), quel que soit l'état d'enroulement dudit tuyau souple (4) sur le tambour (3). Le tuyau souple (4), qui comporte, noyés dans l'épaisseur de sa paroi, des repères masqués, par exemple discontinus, disposés à intervalles réguliers, est guidé à travers un détecteur électro-magnétique (5), solidaire du chassis du camion et est introduit dans la canalisation (7) à nettoyer, par l'ouverture d'un regard (6), où un trou d'homme permet d'engager son extrêmité équipée d'une souris (8). Celle-ci porte les pulvérisateurs capables de diriger un jet oblique de liquide en arrière du tuyau souple (4), facilitant sa progression, en aveugle, par réaction sur les parois de la canalisation (7), habituellement sans autre moyen de contrôle d'efficacité que l'observation de la nature et de la quantité des effluents qui s'écoulent, par gravité, par exemple par l'égout (9).

La mesure des longueurs de tuyau souple (4) permet, au moyen du détecteur (5), - par détection et comptage des repères masqués discontinus, disposés dans l'épaisseur de la paroi dudit tuyau souple (4) - de localiser la position de la souris (8) dans la canalisation (7) et d'évaluer, de ce fait, avec précision, le travail effectué.

La précision du positionnement, repéré à partir de l'entrée de la souris (8) dans la canalisation (7), permet, éventuellement, lors du réenroulement du tuyau souple (4), la mise en fonctionnement d'un dispositif de sécurité, agissant, par exemple par arrêt du surpresseur (2) et destiné à éviter, - comme cela s'est déjà produit dans les installations existantes - que les opérateurs ne subissent l'effet des jets de liquide à haute pression lorsque la souris (8) quitte le regard (6).

La figure 2 est une vue "en écorché", montrant une variante du moyen de repérage linéaire de longueur, de vitesse et de positionnement selon l'invention, placé dans un tuyau souple, par exemple utilisé dans l'application d'hydrocurage, le moyen étant, bien évidemment, utilisable dans d'autres tuyaux souples, renforcés ou non. Dans la variante présentée, le tuyau souple (4) est constitué d'un tube interne en composition polymérique (10), d'une nappe de renforcement (11) en matériau textile, préférentiellement ayant reçu un traitement d'adhérisation pour collage aux couches voisines, d'une couche intermédiaire, en composition polymérique (12), de formulation identique ou différente de celle du tube interne (11), d'une seconde nappe de renforcement (13), en matériau textile également, - les nappes de renforcement étant, dans cette variante, représentées, à titre d'exemple non limitatif, sous forme de tresses - et, enfin, d'un revêtement (15), réalisé dans une composition polymérique présentant, le plus souvent, des caractéristiques de résistance à l'abrasion et aux contraintes de l'environnement.

Dans l'application décrite, le moyen de repérage linéaire de longueur, de vitesse ou de positionnement utilise des repères discontinus et constituées de lunules (14a), découpées dans un film métallique auto-adhésif par exemple, et disposées à intervalles réguliers.

Dans une variante, les repères masqués, discontinus, sont avantageusement constitués de pastilles (14b), découpées dans une feuille en composition polymérique conductrice, cette solution présentant l'avantage d'une meilleure compatibilité entre les repères masqués et les constituants du tuyau souple (4). Le champ magnétique dynamique, détecté à la lecture, sera perturbé par la présence des lunules (14a) ou des pastilles (14b) noyées dans l'épaisseur de paroi du tuyau souple (4).

Dans la variante illustrée, les lunules (14a) sont disposées entre la couche intermédiaire en composition polymérique (12) et la seconde nappe de renforcement textile (13), ce qui assure auxdites lunules (14a) une bonne adhérence et élimine tout risque de glissement lors de la confection du tuyau souple (4).

Dans d'autres variantes non représentées, les moyens de repérage, par exemple constitués des lunules (14a) ou des pastilles (14b), peuvent être disposés, à intervalles réguliers, soit sur le tube interne en composition polymérique (10), avant pose de la première nappe de renforcement textile (11), soit sur l'une des nappes de recouvertes, dans l'étape suivante de fabrication, par la couche intermédiaire en composition polymérique (12) ou par le revêtement (15).

Dans tous les cas, le moyen de repérage linéaire de longueur, de vitesse ou de positionnement - ici matérialisé par les lunules (14a) ou les pastilles (14b) - est noyé dans l'épaisseur de la paroi du tuyau souple (4) et, de ce fait, ne risque pas d'être éliminé, par usure abrasive ou modification chimique due au vieillissement atmosphérique ou au contact avec des liquides agressifs, du revêtement (15), en composition polymérique.

Le moyen de repérage linéaire de longueur, de vitesse ou de positionnement peut se substituer ou s'ajouter aux systèmes de marquage externes, par peinture ou encrage, habituellement apposés sur le revêtement (15) du tuyau souple (4), pour faciliter la coupe à longueur par le commerçant détaillant. Il apporte par rapport à ces systèmes connus de matériel de marquage, généralement une roulette, utilisés pour la découpe, une beaucoup plus grande précision par asservissement éventuel grâce à la lecture magnétique ou électromagnétique des repères masqués tels que les lunules (14a) ou les pastilles (14b).

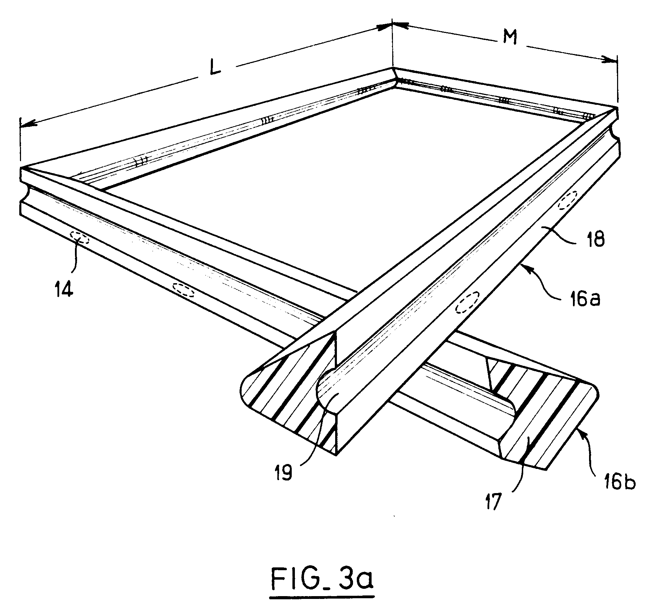

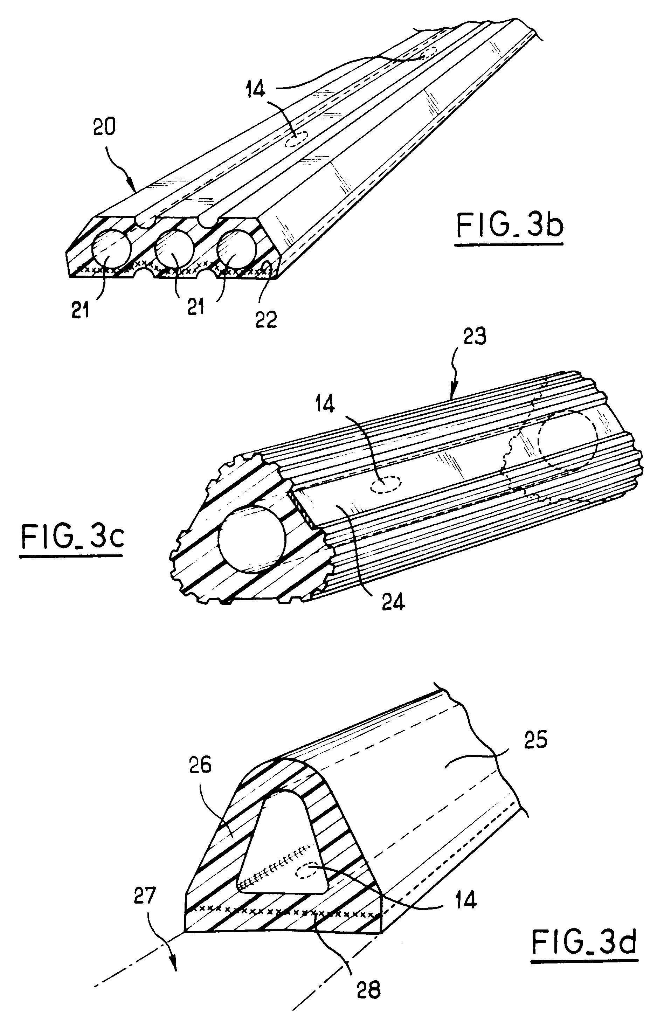

La figure 3 illustre différentes variantes d'application à des profilés souples, du moyen de repérage linéaire de longueur, de vitesse ou de positionnement, constitué de repères masqués discontinus.

Les vues 3a, 3b, 3c, et 3d représentent l'application au repérage de longueur, ou indexation, de profilés de formes diverses, essentiellement en vue d'une coupe, par des procédés automatisés, à une longueur déterminée.

La vue 3a représente un profilé pour garnissage latéral de billard (16a) ou (16b), à base d'une composition élastomérique de haute résilience (17), muni sur certaines de ses faces d'un revêtement textile (18), de faible épaisseur et de texture serrée, et comportant une gorge (19).

Le profilé (16a) présente une section triangulaire à sommet arrondi, alors que le profilé (16b) est une variante à section triangulaire à pan coupé. Quelle que soit la section du profilé, son utilisation se fait par longueurs multiples de 1,5 mètres, la longueur (L) de la table étant de 3 mètres, la largeur (M) étant de 1,5 mètre.

L'introduction de repères masqués, par exemple, comme représenté, sous forme de lunules ou pastilles (14), sous le revêtement textile (18), et, préférentiellement mais non obligatoirement, sur l'une des faces planes du profilé fabriqué en grande longueur, permet la découpe automatisée, avec une grande précision, dudit profilé (16a) ou (16b) aux dimensions requises de 1,5 ou 3,0 mètres, avec un angle d'extrémité à 45° permettant, lors de la pose, l'ajustement des longueurs découpées, dans les coins de la table de billard.

La vue 3b présente la perspective d'un article souple de grande longueur, un joint d'étanchéité (20), particulièrement destiné à l'étanchéité d'éléments de construction en béton tels que les voussoirs pour tunnels ou ponts. Ledit joint d'étanchéité (20), le plus généralement constitué d'une composition élastomérique de formulation adaptée, comporte des alvéoles longitudinales (21) qui en améliorent la déformabilité en compression et un renforcement textile (22), noyé dans sa base, afin de limiter sa déformabilité longitudinale.

Le moyen de repérage linéaire de longueur, de vitesse et de positionnement est, dans l'application illustrée, également composé d'un ensemble de lunules ou pastilles (14), préférentiellement métalliques, disposées à intervalles réguliers et constituant les repères masqués. Avantageusement, les lunules ou pastilles (14) sont positionnées au niveau du renforcement textile (22).

Le repérage des longueurs du joint d'étanchéité (20), en vue de la découpe en unités de dimensions définies, est avantageusement réalisé grâce à un dispositif de lecture par boucle magnétique, détectant la présence des lunules ou pastilles (14) noyées dans l'épaisseur.

Une indexation permet, grâce à la lecture desdites lunules ou pastilles (14), positionnées avec précision, l'optimisation de la découpe d'éléments de différentes longueurs, afin de minimiser les chutes non utilisables, l'opération pouvant, de ce fait, être aisément automatisée.

La vue 3c montre un profilé, de section triangulaire équilatérale à angles arrondis, dont des coupes à longueur sont utilisées pour réaliser des cales de roues (23) pour véhicules. Les repères masqués constituant le moyen de repérage linéaire de longueur, de vitesse ou de positionnement, sont, dans cette application, encore avantageusement réalisés sous forme d'inclusions discontinues telles que des lunules ou pastilles (14), déposées à intervalles réguliers, sur au moins une des faces planes (24) de la cale de roue (23) et recouvertes d'une couche mince de composition polymérique, de nature thermoplastique ou élastomérique.

Comme précédemment décrit, le moyen de repérage de longueur, de vitesse ou de positionnement, est ici utilisé pour la découpe à longueur de tronçons, opération qui peut éventuellement être automatisée.

La vue 3d est celle d'un profilé antichocs (25), dont la section droite (26), en forme de lettre grecque delta, a été optimisée pour la meilleure absorption d'énergie par écrasement sur son plan de fixation (27). Un renforcement textile (28) est disposé dans l'épaisseur de la base dudit profilé antichocs (25) et a pour fonction d'améliorer sa tenue au boulonnage en appui sur le plan de fixation (27).

Ledit renforcement textile (28) est recouvert d'une couche de composition élastomérique préférentiellement analogue à celle qui constitue toute la section du profilé antichocs (25). Les repères masqués sont, dans cette application également, constitués de lunules ou pastilles (14) préférentiellement métalliques, disposées à intervalles réguliers et avantageusement positionnées sur le renforcement textile (28), recouvert de la couche de composition élastomérique qui le masque et le protège de l'environnement. Un système de repérage de positionnement, par la détection électromagnétique des repères masqués, est utilisé pour la découpe à longueur voulue lors de la vente au détail de tels profilés antichocs, avec optimisation du procédé permettant de minimiser les chutes.

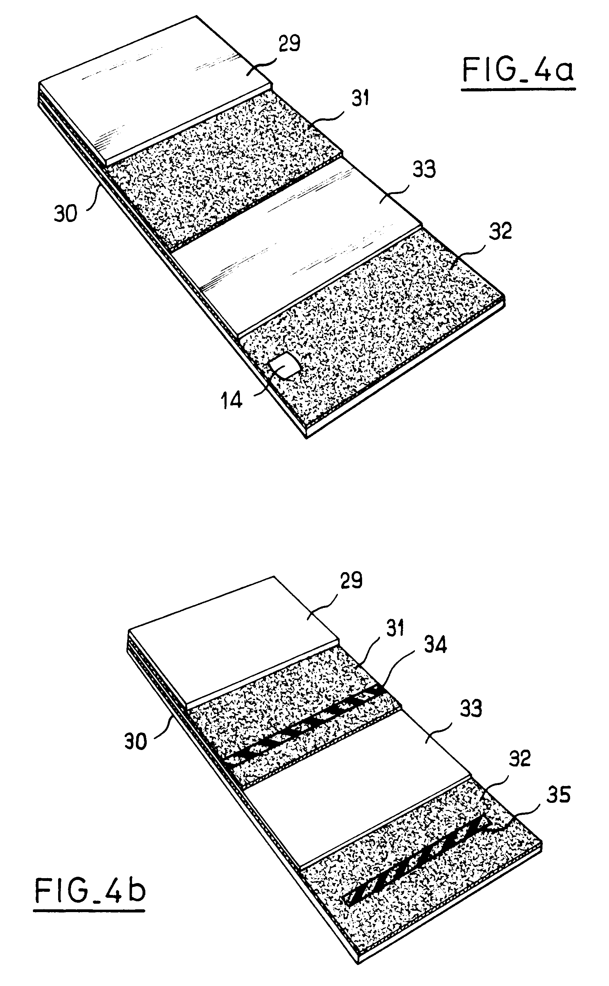

La figure 4 illustre l'application du moyen de repérage linéaire de longueur, de vitesse ou de positionnement à un article plat de grande longueur, tel des feuilles de caoutchouc commercialisées en roules de grande longueur ou certains rouleaux de carton composite comme il en est utilisé en imprimerie ou en emballage. Les vues 4a et 4b représentent toutes deux une perspective écorchée d'un tel article plat à revêtement supérieur (29) et revêtement inférieur (30), et comportant deux nappes de renforcement textile (31) et (32) associées par liaison intime physico-chimique à une couche intermédiaire (33), préférentiellement réalisée dans une composition élastomérique de formulation appropriée, dans le cas des feuilles de caoutchouc.

Dans la variante illustrée en vue 4a, les repères masqués sont des inclusions de petites dimensions, discontinues - préférentiellement des lunules ou pastilles (14) -, par exemple, positionnées à intervalles réguliers, dans le sens longitudinal, au voisinage d'un bord par exemple, comme représenté.

Le moyen de repérage linéaire de longueur, de vitesse ou de positionnement ainsi réalisé doit alors être détecté par un lecteur électro-magnétique local, positionné, avec la précision requise par sa sensibilité, pour signaler les perturbations du champ magnétique dynamique, créées par le passage desdites lunules ou pastilles (14), alignées.

La vue 4b montre une variante de même structure dans laquelle les repères masqués sont réalisés sous forme de barrettes transversales (34), bandelettes d'un matériau à haute conductibilité magnétique ou électrique, tel qu'un film métallique de quelques millimètres de largeur ou une composition polymérique rendue conductrice par incorporation de charges métalliques.

Si les barrettes transversales (34) sont constituées de bandelettes métalliques, elles doivent être réalisées dans un film très mince, de manière à ne pas modifier le comportement mécanique de l'article souple de grande longueur, en cours de service. Lorsque les barrettes transversales (34) sont réalisées sous forme de bandelettes en composition polymérique conductrice, elles seront préférentiellement de faible épaisseur, bien que cette caractéristique ait une influence moins importante en raison de la plus grande homogénéité de matière entre les constituants de l'article souple de grande longueur et les repères masqués.

Les barrettes transversales (34) sont disposées à intervalles réguliers dans la longueur de l'article souple de grande longueur, entre le revêtement supérieur (29) et la nappe de renforcement textile (31) ou entre la nappe de renforcement textile (31) et la couche intermédiaire (33) ou entre la couche intermédiaire (33) et la nappe de renforcement (32) ou encore entre la nappe de renforcement textile (32) et le revêtement inférieur (30). Les barrettes transversales (34) occupent la totalité de la largeur de l'article souple de grande longueur.

Sur la même vue 4b, a été représentée une variante dans laquelle les repères masqués sont des languettes transversales de longueur réduite (35) n'occupant que la majeure partie de la largeur de l'article souple de grande longueur. Lesdites languettes transversales de longueur réduite (35) peuvent être disposées, à intervalles réguliers, entre la nappe de renforcement textile (32) et la couche intermédiaire (33) comme représenté, ou entre le revêtement supérieur (29) et la nappe de renforcement textile (31) dans la position illustrée des barrettes transversales (34) ou entre la nappe de renforcement textile (31) et la couche intermédiaire (33) ou encore entre la nappe de renforcement textile (32) et le revêtement inférieur (30).

L'utilisation des barrettes transversales (34) ou des languettes transversales de longueur réduite (35) présente, par rapport à la variante comportant des lunules ou pastilles (14) de la vue 4a, l'avantage de ne pas nécessiter un positionnement particulier du lecteur électromagnétique par rapport à l'article souple de grande longueur, la détection de la perturbation du champ magnétique dynamique se faisant à la verticale, au dessus ou au dessous de l'article souple de grande longueur, dans un espace laissé disponible par l'installation.

Le moyen de repérage linéaire de longueur, de vitesse ou de positionnement permet, dans les variantes de la figure 4, non seulement la découpe en longueurs déterminées, chez le fabricant ou l'utilisateur, mais encore le repérage de dimensions intermédiaires, par exemple pour le pliage -avec asservissement éventuel des machines- particulièrement pour les papiers et cartons et pour les films composites multi-couche d'emballage, le contrôle des vitesses de défilement, tant en fabrication - permettant ainsi une gestion directe de la production- que dans les phases aval de transformation, autorisant ainsi un comptage des produits unitaires fabriqués, ce qui conduit, par association à des moyens informatiques appropriés, à la logistique directe de la production, depuis l'alimentation en composants initiaux jusqu'à la livraison des produits finis.

Il apparait là que les capteurs détectant le passage par exemple des lunules ou pastilles (14), des barrettes transversales (34), ou des languettes transversales de longueur réduite (35), qui ne sont pas soumises à un champ magnétique homogène par traversée d'une bobine creuse, doivent avoir une sensibilité appropriée avec la distance, celle-ci pouvant varier entre le plan des repères masqués et la position des capteurs. Cette variation de distance ne soulève pas de difficulté particulière dans la mesure où c'est la perturbation du champ magnétique dynamique qui doit être détectée, et non son intensité.

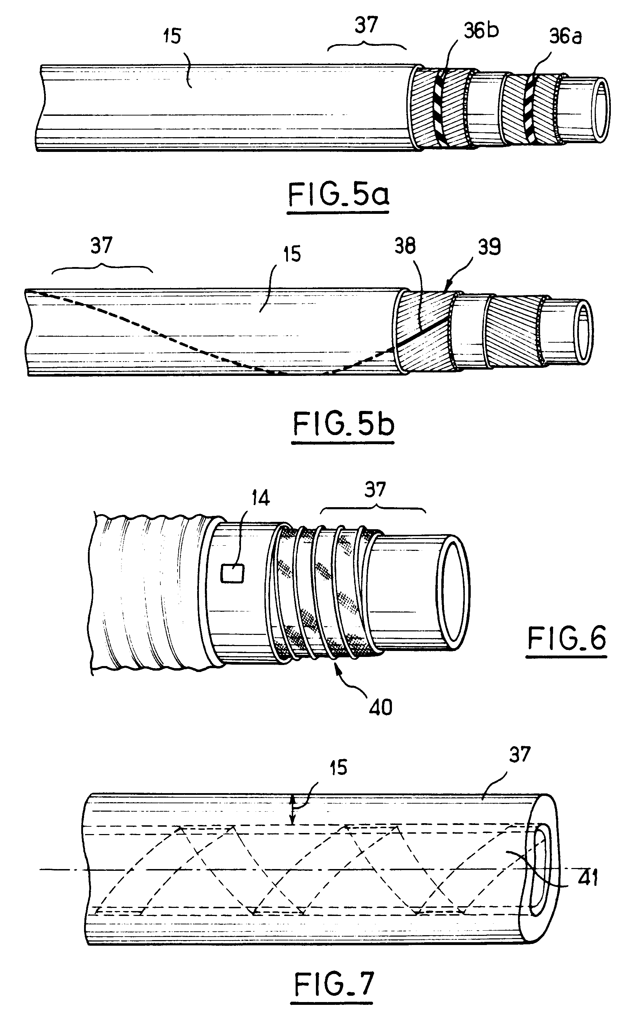

La figure 5 propose, dans l'application à des tuyaux souples, deux variantes du moyen de repérage linéaire de longueur, de vitesse ou de positionnement, constituées l'une de repères masqués discontinus, l'autre de repères masqués continus.

La vue 5a montre une application de repères linéaires transversaux discontinus, sous forme d'anneaux (36a) le plus souvent métalliques, ou de bracelets (36b), disposés, sur l'une des couches intermédiaires, dans un tuyau souple (37) dont la structure peut être semblable à celle décrite en figure 2. Préférentiellement, les repères masqués sont placés sous le revêtement (15) du tuyau souple (37) sous forme d'un anneau (36a), réalisé en un film métallique auto-adhésif, avec ou sans recouvrement de ses extrémités, pour former un anneau totalement fermé.

Avantageusement, les repères masqués sont constitués d'un bracelet (36b), en composition polymérique, chargée de particules conductrices, par exemple de formulation voisine de celle du constituant du tuyau souple (37) avec lequel il est en contact -ce qui accroît la compatibilité entre ledit bracelet (36b) et le composant du tuyau souple (37) -, les extrémités dudit bracelet (36b) pouvant être jointives ou non, ou même venir en recouvrement sur un faible longueur. Dans cette variante, la détection de la perturbation du champ magnétique dynamique peut se faire, aussi bien au moyen d'une bobine traversée par le tuyau souple (37), que par un capteur disposé latéralement.

La vue 5b représente une variante d'application dans laquelle la détection de la perturbation du champ magnétique dynamique n'est possible que par un capteur latéral ; le passage à travers une bobine ne détecterait qu'un signal continu ne pouvant servir à un quelconque repérage. Le tuyau souple (37) reçoit, en effet, dans cette variante, au cours de sa fabrication, un repère continu enroulé en hélice (38), constitué par exemple par un fil métallique préférentiellement substitué à l'un des fils constituants de sa nappe de renforcement (39). Ledit repère continu enroulé en hélice (38) est donc bien également masqué, lorsque la nappe de renforcement (39) reçoit le revêtement (15), au cours de la fabrication du tuyau souple (37).

La figure 6 est une vue d'un tuyau souple (37) dont la conception comporte d'origine une hélice métallique de renfort (40), le pas de cette hélice étant déterminé par des raisons mécaniques de résistance à l'écrasement ou à l'aplatissement sous dépression, tout en assurant la souplesse de flexion à la courbure du tuyau souple (37). Il est visible que l'usage d'un moyen de repérage de longueur, de vitesse ou de positionnement, par capteur latéral, peut se faire dans les mêmes conditions que pour le tuyau souple (37) représenté en vue 5a, par adaptation du système de traitement du signal, lui permettant de prendre en compte le pas de l'hélice. En cas de besoin, la combinaison de cette lecture par capteur latéral peut se faire avec passage dans l'alésage d'une bobine magnétique, détectant les lunules ou pastilles (14), disposées à un pas très différent, ceci permettant le calage périodique d'un compteur basé sur le déroulement des spires de l'hélice métallique de renfort (40), le pas de cette dernière étant nécessairement petit par rapport au diamètre du tuyau souple (37).

La figure 7 représente une variante technologique de tuyau, où le repérage de longueur peut être assuré par un capteur latéral détectant la présence d'une hélice enroulée de façon continue autour du tuyau souple (37).

Le tuyau souple (37) est équipé, au cours de sa fabrication, dans l'une quelconque des intercouches, mais préférentiellement la plus proche de la surface, sous le revêtement (15), d'un repère masqué continu en hélice (41) à conductibilité électrique ou magnétique élevée par rapport à celle du tuyau souple (37).

Ledit repère masqué continu en hélice (41) peut être constitué soit d'un film métallique mince, de faible largeur, préférentiellement mais non obligatoirement auto-adhésif, soit d'un ruban, de quelques millimètres de largeur et de faible épaisseur, en composition polymérique rendue conductrice par incorporation de charges appropriées.

Au cours de la fabrication du tuyau souple (37), le repère masqué continu en hélice (41) est posé, préférentiellement, sur un composant présentant une surface lisse, à un pas totalement indépendant de celui correspondant à l'angle d'équilibre des nappes de renforcement du tuyau souple (37). La variante qui comporte un repère masqué continu en hélice (41) en ruban de composition polymérique conductrice, présente, par rapport à la variante en film métallique, l'avantage d'une similitude de composition par rapport à celle des constituants polymériques du tuyau souple (37) et, de ce fait, une parfaite compatibilité avec eux, ne modifiant ainsi, en aucune façon, les performances intrinsèques dudit tuyau souple (37).

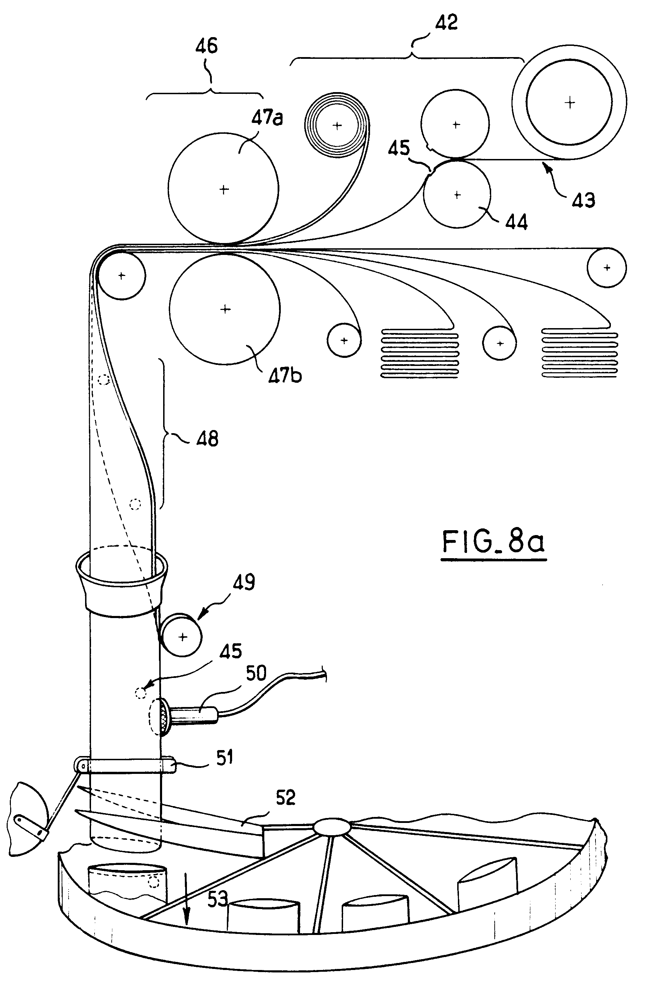

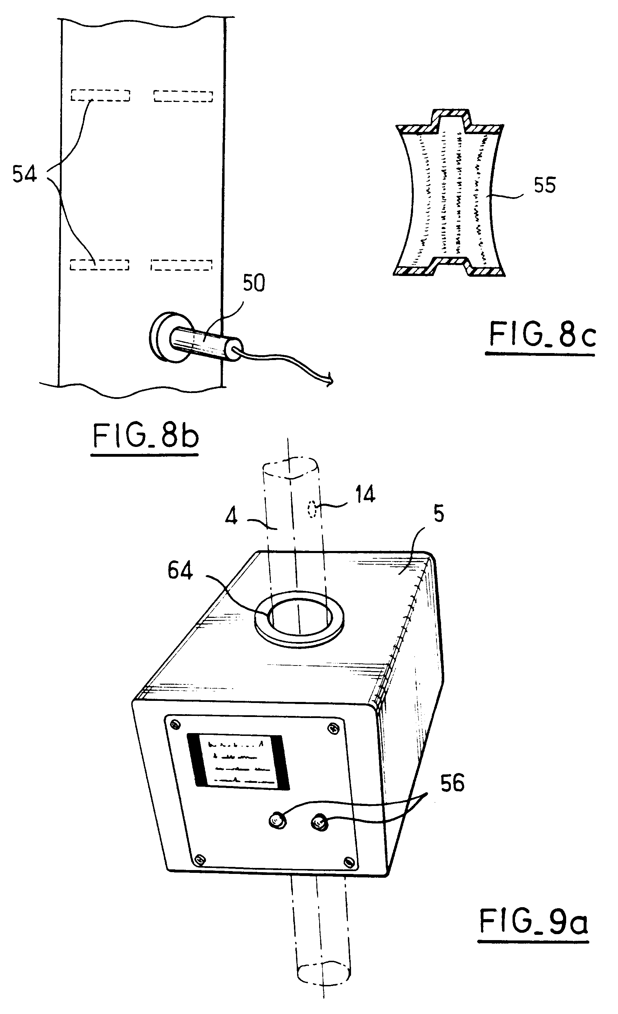

La figure 8 décrit l'application du moyen de repérage linéaire de longueur, de vitesse ou de positionnement à la réalisation d'un article souple de grande longueur, composite multi-couche, dans lequel au moins une des couches internes est constituée d'un matériau à conductibilité électrique ou magnétique élevée, tel qu'un film métallique mince ou une feuille en composition polymérique conductrice, les repères masqués étant alors discontinus et constitués de lacunes introduites volontairement.

L'article souple de grande longueur est, dans cette variante, composé d'une superposition d'au moins trois couches, dont l'une, interne, est un film métallique mince, tel que de l'aluminium, par exemple, ou une feuille en composition polymérique conductrice.

Un tel composite est utilisé en tant que matériau d'emballage, soit sous forme de feuilles, soit sous forme de tube à paroi mince (comme illustré), en raison de ses propriétés d'étanchéité dites "propriétés barrière" et de ses caractéristiques physiques, telle la conductibilité thermique. Son emploi est particulièrement développé dans la fabrication de contenants à liquides ou à pulvérulents, en forme de berlingots ou de briques qui, après pliage éventuel, sont fermés, par soudure en ligne, et découpés avec indexation précise par rapport aux inscriptions imprimées en continu sur la surface dudit tube ou de la feuille composite.

Un repérage linéaire de longueur, de vitesse ou de positionnement, indépendant des marquages portés en surface et susceptibles de varier en fonction des fabrications, est rendu possible par la détection, grâce à un lecteur électromagnétique, des perturbations du champ magnétique dynamique du composite, provoquées par la présence dans la couche interne constituée du film métallique mince ou de la feuille en composition polymérique conductrice, de lacunes volontairement créées.

La détection des perturbations du champ magnétique dynamique permet, ainsi, l'indexation des machines de soudure des bords, de positionnement des marquages de surface, de pliage et de découpe en contenants unitaires, alors même que la vitesse de défilement du matériau composite est susceptible de varier.

La vue 8a illustre l'ensemble du dispositif de réalisation de contenants unitaires, à partir de composants souples rassemblés dans la zone de stockage (42), l'un des composants approvisionnés en rouleau étant un film conducteur (43), constitué d'un film métallique mince, en aluminium par exemple, ou d'une feuille en composition polymérique conductrice.

Un dispositif de poinçonnage (44), à galet roulant sur le film conducteur (43), y découpe des pastilles et les en extrait, laissant ainsi des lacunes volontairement créées (45), masquées dans la phase suivante de fabrication, lors de la superposition des autres couches dans la zone d'assemblage (46). Deux rouleaux presseurs (47a) et (47b) laminent l'empilage multicouche ainsi constitué pour créer le matériau composite qui est ensuite transformé, sous forme tubulaire, par passage dans la zone de pliage et de formage (48) et fermé par le dispositif de soudage (49).
Le défilement du tube à paroi mince, guidé devant un capteur électromagnétique (50), placé après le dispositif de soudage (49) -comme illustré- ou avant lui, fournit -par détection des perturbations du champ magnétique dynamique du matériau composite provoquées par la présence des lacunes volontairement créées (45)-l'indexation, par rapport au matériau composite défilant, pour la pince de fermeture d'extrémité (51) et pour la cisaille de découpe en contenants unitaires (52). Dans la zone de remplissage et de fermeture (53), en aval, le matériau composite, article souple de grande longueur, est donc transformé en contenants unitaires, alors remplis et hermétiquement clos, sous forme discontinue.

Les lacunes volontairement créées (45) -ici représentées sous forme circulaire, mais pouvant également prendre la forme d'un ovale, d'un rectangle ou d'une fente de géométrie quelconque-présentes dans le film conducteur (43), servant de matériau barrière dans le composite multicouche, ne doivent pas perturber la fonction étanchéité dudit matériau barrière. Elles sont donc préférentiellement localisées, par exemple, à la lisière du film conducteur (43), dans la zone de soudure assurant la fermeture de la forme tubulaire, ce qui permet l'utilisation du moyen de repérage linéaire de longueur, de vitesse ou de positionnement même après réalisation des contenants unitaires, pour leur comptage, par exemple.

Pour ne pas perturber la fonction étanchéité du film conducteur (43), une autre possibilité consiste à localiser les lacunes volontairement créées (45) dans les bords du film conducteur (43), zone où est ensuite effectuée le pliage éventuel et surtout la découpe par la cisaille de découpe en contenants unitaires (52).

La zone contenant les lacunes volontairement créées (45) se trouve alors éliminée au découpage et le moyen de repérage linéaire, par détection des perturbations du champ magnétique dynamique n'est, alors, plus utilisable en aval de ladite cisaille de découpe en contenants unitaires (52).

La vue 8b illustre un matériau composite multicouche dans lequel les lacunes volontairement créées dans le film conducteur se présentent sous forme de fentes transversales (54), masquées par les couches supérieure(s) ou inférieure(s) du matériau composite multicouche sur toute ou partie de sa longueur. Cette disposition a pour avantage de ne plus nécessiter un alignement précis desdites fentes transversales (54) avec le capteur électromagnétique (50), pour la détection des perturbations du champ magnétique dynamique dudit matériau composite multi-couche, lorsque la forme du contenant unitaire final permet cette disposition.

Des variantes dans la distance entre les fentes longitudinales (54) ou dans leurs dimensions sont possibles, dans cette application, si la détection des perturbations du champ magnétique dynamique est utilisée comme moyen de mise en oeuvre des matériels de fabrication à mouvement alternatif tels que la pince de fermeture d'extrémité (51) et la cisaille de découpe en contenants unitaires (52).

Le dispositif de poinçonnage (44), grâce à la modification du pas de réalisation des lacunes volontairement créées (45) ou des fentes transversales (54), permet la fabrication de contenants unitaires de longueurs différentes dans un matériau composite multi-couche continu, ce qui accroît, de ce fait, la flexibilité des équipements de production.

La vue 8c illustre un exemple de contenant unitaire (55) résultant de l'ensemble des étapes de fabrication depuis l'empilage des couches -y compris le film conducteur (43) comportant des lacunes volontairement créées (45) ou les fentes transversales (54)-, jusqu'au remplissage et à la fermeture hermétique.

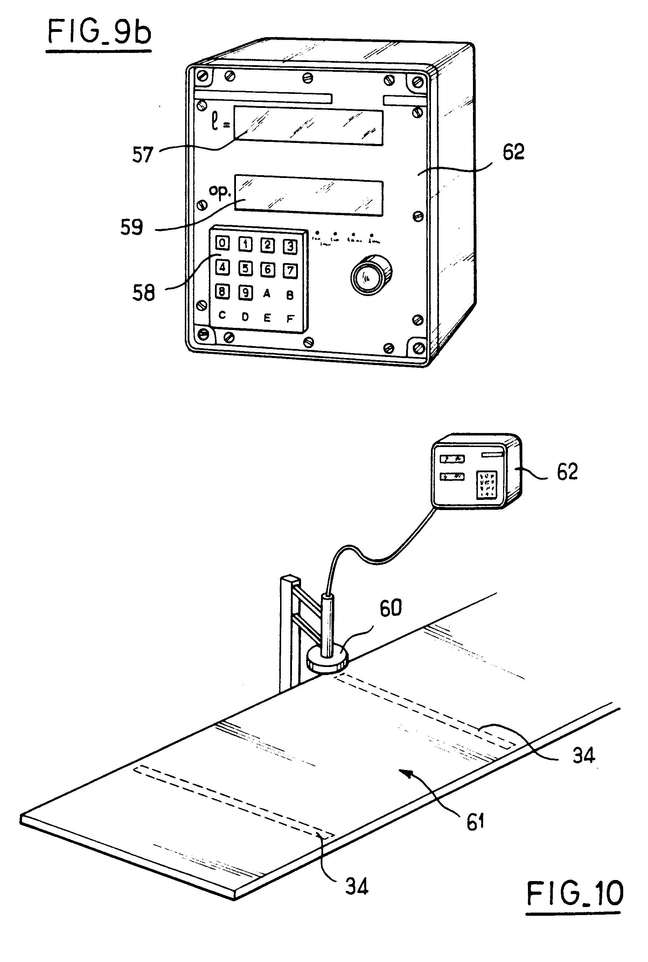

Les figures 9, 10, et 11 décrivent différents moyens de détection et/ou de traitement des perturbations du champ magnétique dynamique de l'article souple de grande longueur.

La figure 9 schématise un dispositif de détection et de traitement de l'information fonctionnant par boucle magnétique et utilisable pour des articles souples de grande longueur comportant des repères masqués dont la section est d'une dimension compatible avec ce dispositif de détection. Un détecteur (5) comporte un passage à faible jeu (64) pour la traversée d'une boucle magnétique par l'article souple de grande longueur mais de section limitée.

La vue 9a est une vue perpective du boîtier contenant le détecteur (5) nécessaire au repérage des perturbations du champ magnétique dynamique induit par la traversée de la boucle électromagnétique par l'article souple de grande longueur (4), perturbations créées par la présence des repères masqués noyés dans l'épaisseur de la paroi dudit article souple de grande longueur (4).

Ce matériel robuste, dit "de qualité embarquée", permettant le transport et l'utilisation sur véhicules de chantier, comme son emploi en atelier, possède deux voyants (56) indiquant son bon fonctionnement et la détection de la perturbation du champ magnétique dynamique par le passage des repères masqués, avec, éventuellement, un rappel acoustique permettant à l'opérateur de suivre le bon déroulement de l'opération, sans regarder l'appareil.

En particulier, outre le traitement informatique possible, un simple changement de pas des repères masqués - aisément réalisable en fabrication- peut attirer l'attention de l'opérateur, par ce simple rappel acoustique, à fréquence modifiée, sur l'occurence des derniers mètres déroulés de l'article souple de grande longueur.

Mais l'intérêt essentiel du dispositif réside dans la possibilité du traitement informatique du signal ainsi repéré. La partie électronique, préréglée sur la sensibilité voulue, envoie un signal vers un boîtier de saisie de données, à chaque perturbation du champ magnétique dynamique provoquée par le passage dans la boucle magnétique du détecteur (5) d'un repère masqué, ici schématisé par une lunule (14). La partie électronique peut être placée à proximité du détecteur (5), si l'environnement le permet, ou à distance, dans un endroit moins exposé, le traitement des données de travail pouvant être immédiat ou différé. Dans l'application d'hydrocurage des égouts, par exemple, le traitement informatique des données permet, en effet, outre une régulation immédiate des conditions opératoires, un suivi logistique complet.

La régulation immédiate des conditions opératoires concerne la vitesse d'enroulement ou de déroulement du tambour pour l'asservir à une vitesse constante de défilement du tuyau malgré la variation de diamètre de l'enroulement, permettant ainsi le contrôle permanent de sa progression dans la canalisation enterrée et une interruption de la pression de liquide au moment où le tuyau quitte la canalisation, par exemple.

Le suivi logistique concerne la gestion des temps passés, les débits de nettoyage, la facturation directe, sur site, à l'issue de l'opération ainsi que toute étude comparative d'interventions réalisées à des périodes différentes.

Moyennant l'identification de l'opération sur un clavier, l'unité centrale embarquée, autorisant la comparaison d'interventions successives, au même endroit, permet, par conséquent, une régulation automatique des longueurs ou des traitements en modifiant vitesse d'avancement du tuyau dans la canalisation, ou pression de l'eau en des positions repérées.

En particulier, une prestation de service pour des tiers est caractérisée par une transparence des opérations effectuées du simple fait de l'existence d'un moyen d'enregistrement et de traitement de l'information. La rédaction automatique de compte-rendus d'intervention ainsi que l'établissement de factures ou tout document facilitant la prise de décision deviennent ainsi immédiatement réalisables, sur le site même du chantier.

Sans dépense supplémentaire, la technique de mise en place des repères masqués, lors de la fabrication de l'article souple de grande longueur, permet l'incorporation de messages d'identification -éventuellement codés- par la disposition, en des emplacements déterminés, d'éléments d'étiquetage particuliers.

La vue 9b présente une unité centrale de traitement de l'information (62), disponible sur le marché du matériel de saisie des données, convenant à la logistique de la fabrication, de la découpe, de la transformation en atelier, comme à l'exploitation de l'article souple de grande longueur et à son suivi en service sur site, grâce à sa robustesse.

L'affichage digital permet, dans une fenêtre (57), le repérage des longueurs déroulées, par exemple. Soit par utilisation d'une double boucle magnétique, soit par asservissement au levier de commande du tambour, l'ambiguité sur le sens de progression de l'article souple de grande longueur est levée et le matériel permet l'affichage précis de la longueur déroulée depuis le tambour.

Un clavier numérique (58) permet le repérage de l'opération rappelée sur un écran (59) et donc toute comparaison avec des paramètres stockés en mémoire.

Un tel traitement de l'information autorise donc, sur le site de production, la gestion directe de la fabrication de l'article de grande longueur, depuis la mesure des longueurs fabriquées, le positionnement des marquages de surface, le suivi des composants de fabrication, le pliage éventuel ou la découpe en longueurs unitaires avec optimisation pour réduire les chutes, et même le suivi des stocks. Par le même processus, le traitement de l'information permet le suivi en exploitation de l'article souple de grande longueur, sur le site même d'utilisation, la programmation des opérations de maintenance et les interventions d'assistance après-vente au cours de la vie dudit article souple de grande longueur.

La figure 10 schématise l'usage d'un capteur latéral, nécessaire pour les applications où la lecture par boucle magnétique est rendue impossible, soit par les dimensions de l'article souple de grande longueur, soit par la nature, la disposition ou les dimensions des repères masqués.

Dans cette variante, il est fait usage d'un capteur latéral (60), du type utilisé pour la détection au défilé de particules métalliques dans les installations de manutention. Dans la variante illustrée, une feuille composite souple (61) - par exemple, un film d'emballage à barrière incorporée - est munie de repères masqués tels que des barrettes transversales (34).

Le message issu du capteur latéral (60), résultant des perturbations du champ magnétique dynamique de la feuille composite souple (61) par les barrettes transversales (34), est reçu dans l'unité centrale de traitement de l'information (62) où il est traité sous la forme qualitative de grandeur électrique dépassant un seuil déterminé. Il est, de ce fait, rendu indépendant de la distance entre le capteur latéral (60) et la feuille composite souple (61), distance dont la fluctuation au cours du défilement modifierait les conditions du champ magnétique induit par les repères masqués constitués des barrettes transversales (34).

Le fonctionnement de l'ensemble capteur latéral (60) et unité centrale de traitement de l'information (62) de la présente variante est tout à fait analogue à celui de l'ensemble constitué du détecteur (5) et de l'unité centrale de traitement de l'information (62) de la figure 9 et offre les mêmes avantages.

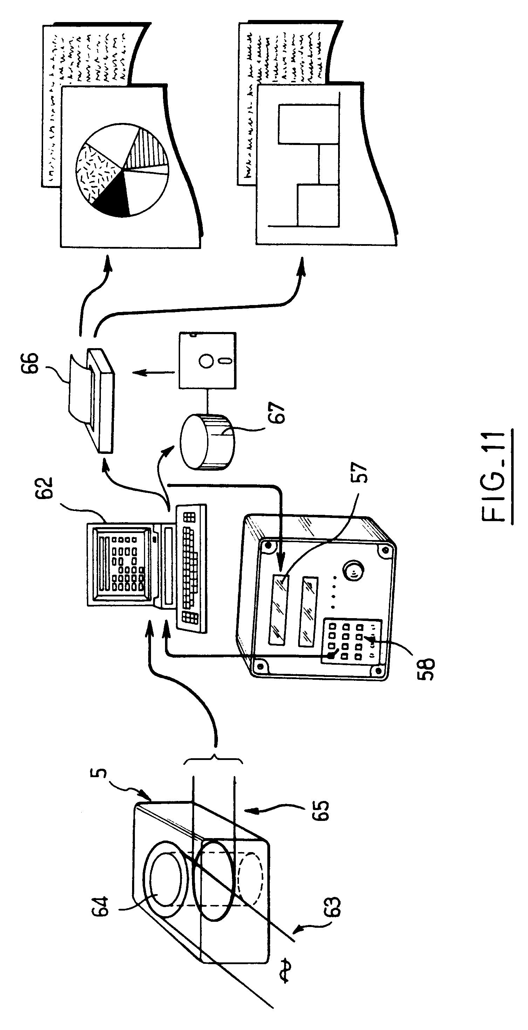

La figure 11 est le schéma correspondant à l'exploitation informatique des messages électriques émis par un capteur à boucle traversante tel que le détecteur (5) ou par un capteur latéral, basés l'un comme l'autre sur l'induction résultant de l'émission d'un champ magnétique alternatif, dont la fréquence est choisie pour être aussi peu sensible que possible aux parasites régnant dans l'environnement, soit dans l'atelier de production, soit sur le site d'exploitation.

Ayant pour principe la saturation du magnétisme induit, le repérage du message électrique reçu est relativement indépendant du champ magnétique émis, sous réserve que ce dernier dépasse un seuil prédéterminé. La boucle émettrice (63), disposée autour du passage à faible jeu (64) est concentrique à la boucle réceptrice (65). En l'absence de noyau magnétique, le faible signal reçu peut être facilement compensé dans l'unité centrale de traitement de l'information (62) qui reçoit la grandeur électrique émise par la boucle réceptrice (65), éventuellement dédoublée, pour détecter, si nécessaire, le sens de progression de l'article souple de grande longueur.

Par le message d'identification introduit, par exemple, au clavier numérique (58), l'unité centrale de traitement de l'information (62) traduit la grandeur électrique en termes de métrages déroulés, par exemple, affichés dans la fenêtre (57), ce message et tout traitement prenant en compte ces données pouvant également être stockés en mémoire de l'unité centrale de traitement de l'information (62) ou sur disque magnétique (67), ou bien apparaître, sous forme papier, par l'intermédiaire de l'imprimante (66).

Le moyen de repérage linéaire de longueur, de vitesse ou de positionnement, constitué de repères masqués, continus ou discontinus, noyés dans l'épaisseur de la paroi d'un article souple de grande longueur, présente les avantages suivants :
- il est facile à mettre en place dans ledit article souple de grande longueur, quelle que soit sa section et sans perturbation des étapes de fabrication ;
- il n'altère ni l'esthétique ni les caractéristiques physiques et mécaniques de l'article souple de grande longueur ;
- il permet un repérage, qui peut rester secret, puisque masqué, d'éléments d'identification de lots de composants de l'article souple de grande longueur, de date et d'atelier de production ... ;
- il constitue un moyen d'asservissement des machines de production, de pliage, de découpe de l'article souple de grande longueur, par indexation par rapport aux constituants ;
- il n'utilise, pour la détection des perturbations du champ magnétique dynamique de l'article souple de grande longueur, que des détecteurs ou des capteurs du commerce, ne nécessitant pas d'adaptation sophistiquée, robustes et peu coûteux, utilisables en atelier de production comme sur site d'exploitation ;
- en association avec des moyens de traitement de l'information appropriés, il permet la gestion informatique des fabrications, depuis la mesure des longueurs produites jusqu'au suivi des stocks, en passant par le contrôle de toute étape intermédiaire ;
- associé à des moyens de même type, il autorise la logistique directe, sur site, des prestations fournies et la programmation de la maintenance.

L'homme de l'art peut, bien entendu, combiner les différentes variantes de repères masqués, ainsi que leur disposition dans l'épaisseur de paroi de l'article souple de grande longueur, sans sortir du cadre de l'invention.

## Revendications

1. Moyen de repérage linéaire de longueur, de vitesse ou de positionnement destiné à être détecté, dans un champ magnétique dynamique induit, par repérage d'un message électrique reçu par des capteurs appropriés, caractérisé en ce que :
- ledit moyen de repérage linéaire est constitué de repères masqués (14a), (14b), (34), (35), (36a), (36b), (38), (41), (45) ou (54), noyés dans l'épaisseur de la paroi d'un article souple de grande longueur, composite et de forme prismatique ou cylindrique,
- lesdits repères masqués présentent une conductibilité magnétique ou électrique au moins dix fois supérieure à celle de l'un quelconque des composants de l'article souple de grande longueur, et en ce que
- le message électrique reçu par lesdits capteurs appropriés est sensiblement indépendant du champ magnétique émis, sous réserve que ledit champ magnétique dépasse une valeur seuil prédéterminée.

2. Moyen de repérage linéaire de longueur, de vitesse ou de positionnement selon la revendication 1, caractérisé en ce que les repères masqués (14a), (14b), (34), (36a) ou (36b), (45) ou (54) sont discontinus.

3. Moyen de repérage linéaire de longueur, de vitesse ou de positionnement selon la revendication 1, caractérisé en ce que les repères masqués (38) ou (41) sont continus.

4. Moyen de repérage linéaire de longueur, de vitesse ou de positionnement selon l'une des revendications 1 ou 2, caractérisé en ce que lesdits repères masqués, discontinus, sont constitués de lunules (14a), métalliques, de faible épaisseur, et sont disposés longitudinalement entre deux composants de l'article souple de grande longueur.

5. Moyen de repérage linéaire de longueur, de vitesse ou de positionnement selon l'une des revendications 1 ou 2, caractérisé en ce que lesdits repères masqués, discontinus, sont constitués de pastilles (14b), réalisée en composition polymérique chargée de particules conductrices et sont disposés longitudinalement entre deux composants de l'article souple de grande longueur.

6. Moyen de repérage linéaire de longueur, de vitesse ou de positionnement selon l'une des revendications 1 ou 2, caractérisé en ce que lesdits repères masqués, discontinus, sont constitués de lacunes individuelles (45) créées volontairement dans un film métallique de faible épaisseur, disposé entre deux composants de l'article souple de grande longueur.

7. Moyen de repérage linéaire de longueur, de vitesse ou de positionnement selon l'une des revendications 1 ou 2, caractérisé en ce que lesdit repères masqués, discontinus, sont constitués de lacunes individuelles (45) créées volontairement dans une feuille en composition polymérique conductrice disposée entre deux composants de l'article souple de grande longueur.

8. Moyen de repérage linéaire de longueur, de vitesse ou de positionnement selon l'une des revendications 1 ou 2, caractérisé en ce que lesdits repères masqués, discontinus, sont constitués d'anneaux (36a), métalliques, de faible épaisseur, disposés perpendiculairement à l'axe et noyés entre deux composants de l'article souple de grande longueur.

9. Moyen de repérage linéaire de longueur, de vitesse ou de positionnement selon l'une des revendications 1 ou 2, caractérisé en ce que lesdits repères masqués, discontinus, sont constitués de bracelets (36b), réalisés en composition polymérique chargée de particules conductrices, disposés perpendiculairement à l'axe et noyés entre deux composants de l'article souple de grande longueur.

10. Moyen de repérage linéaire de longueur, de vitesse ou de positionnement selon la revendication 2, caractérisé en ce que lesdits repères masqués sont constitués de barrettes transversales (34) de faible épaisseur, disposées entre deux composants de l'article souple de grande longueur prismatique, dont elles occupent toute la largeur.

11. Moyen de repérage linéaire de longueur, de vitesse ou de positionnement selon la revendication 2, caractérisé en ce que lesdits repères masqués sont constitués de languettes transversales (35), disposées entre deux composants de l'article souple de grande longueur prismatique, dont elles occupent une partie de la largeur.

12. Moyen de repérage linéaire de longueur, de vitesse ou positionnement selon la revendication 2, caractérisé en ce que lesdits repères masqués sont constitués de fentes transversales (54), créées volontairement dans un film métallique de faible épaisseur, disposé entre deux composants de l'article souple de grande longueur prismatique, lesdites fentes transversales (54) s'étendant sur tout ou partie de sa largeur.

13. Moyen de repérage linéaire de longueur, de vitesse ou de positionnement selon la revendication 2, caractérisé en ce que lesdits repères masqués sont constitués de fentes transversales (54), créées volontairement dans une feuille en composition polymérique conductrice, disposée entre deux composants de l'article souple de grande longueur prismatique, lesdites fentes transversales (54) s'étendant sur tout ou partie de sa largeur.

14. Moyen de repérage linéaire de longueur, de vitesse ou de positionnement selon la revendication 3, caractérisé en ce que lesdits repères masqués sont constitués d'une hélice (38) ou (41) disposée, par bandelage ou enroulement hélicoïdal d'un fil ou ruban métallique de faible épaisseur, entre deux composants de l'article souple de grande longueur.

15. Moyen de repérage linéaire de longueur, de vitesse ou de positionnement selon la revendication 3, caractérisé en ce que lesdits repères masqués sont constitués d'une hélice (41) disposée, par bandelage ou enroulement hélicoïdal d'un ruban en composition polymérique conductrice, entre deux composants de l'article souple de grande longueur.

16. Tuyau souple (4), caractérisé en ce qu'il comporte, entre deux composants tels qu'une nappe de renforcement (11) ou (13) et son tube interne (10), ou une couche intermédiaire (12) ou son revêtement (15), un moyen de repérage linéaire de longueur de vitesse ou de positionnement conforme à l'une des revendications 1 à 9 ou 14 ou 15, permettant, grâce à la lecture par des capteurs appropriés, la gestion de sa fabrication, l'automatisation de sa découpe en longueurs déterminées et l'exploitation de ses conditions d'utilisation sur site.

17. Profilés souples tels que des garnissages de tables de billard (16a) ou (16b), ou des joints d'étanchéité (20) ou des cales de roues (23) ou des profilés anti-chocs (25), caractérisés en ce qu'ils comportent, noyés dans l'épaisseur de leur paroi, entre deux de leurs composants, un moyen de repérage linéaire de longueur, de vitesse ou de positionnement conforme à l'une des revendications 1 à 11 permettant, grâce à la lecture par des capteurs appropriés, la gestion de leur fabrication et de leur découpe en longueurs déterminées.

18. Matériau composite multicouche d'emballage caractérisé en ce qu'il comporte, entre deux couches, un moyen de repérage de longueur, de vitesse ou de positionnement conforme à l'une des revendications 1 à 11, permettant, grâce à la lecture par des capteurs appropriés, l'asservissement du matériel de fabrication des contenants flexibles ou de machines de pliage ou découpage.

## Claims

1. Means for the linear marking of length, speed or positioning, characterised in that it consists of concealed markings (14a, 14b, 34, 35, 36a, 36b, 38, 41, 45 or 54) embedded in the thickness of the wall of a long, composite, flexible article of prismatic or cylindrical shape, in order to create, during reading by suitable sensors, a disturbance of the dynamic magnetic field detected.

2. Means for the linear marking of length, speed or positioning according to claim 1, characterised in that the concealed markings (14a, 14b, 34, 35, 36a or 36b, 45 or 54) are discontinuous.

3. Means for the linear marking of length, speed or positioning according to claim 1, characterised in that the concealed markings (38 or 41) are continuous.

4. Means for the linear marking of length, speed or positioning according to either of claims 1 or 2, characterised in that said discontinuous concealed markings consist of thin metal lunules (14a) and are arranged longitudinally between two components of the long, flexible article.

5. Means for the linear marking of length, speed or positioning according to either of claims 1 or 2, characterised in that said discontinuous concealed markings consist of lozenges (14b) made of a polymeric composition filled with conductive particles and are arranged longitudinally between two components of the long, flexible article.

6. Means for the linear marking of length, speed or positioning according to either of claims 1 or 2, characterised in that said discontinuous concealed markings consist of individual holes (45) made deliberately in a thin metal film arranged between two components of the long, flexible article.

7. Means for the linear marking of length, speed or positioning according to either of claims 1 or 2, characterised in that said discontinuous concealed markings consist of individual holes (45) made deliberately in a sheet of a conductive polymeric composition arranged between two components of the long, flexible article.

8. Means for the linear marking of length, speed or positioning according to either of claims 1 or 2, characterised in that said discontinuous concealed markings consist of thin metal rings (36a) arranged perpendicularly to the axis and embedded between two components of the long, flexible article.

9. Means for the linear marking of length, speed or positioning according to either of claims 1 or 2, characterised in that said discontinuous concealed markings consist of circular bands (36b) made of a polymeric composition filled with conductive particles, arranged perpendicularly to the axis and embedded between two components of the long, flexible article.

10. Means for the linear marking of length, speed or positioning according to either of claims 1 or 2, characterised in that said discontinuous concealed markings consist of thin transverse bars (34) arranged between two components of the prismatic, long, flexible article, of which they occupy the whole width.

11. Means for the linear marking of length, speed or positioning according to either of claims 1 or 2, characterised in that said discontinuous concealed markings consist of transverse tongues (35) arranged between two components of the prismatic, long, flexible article, of which they occupy part of the width.

12. Means for the linear marking of length, speed or positioning according to either of claims 1 or 2, characterised in that said discontinuous concealed markings consist of transverse slots (54) made deliberately in a thin metal film arranged between two components of the prismatic, long, flexible article, said transverse slots (54) extending over all or part of its width.

13. Means for the linear marking of length, speed or positioning according to either of claims 1 or 2, characterised in that said discontinuous concealed markings consist of transverse slots (54) made deliberately in a sheet of a conductive polymeric composition arranged between two components of the prismatic, long, flexible article, said transverse slots (54) extending over all or part of its width.

14. Means for the linear marking of length, speed or positioning according to either of claims 1 or 3, characterised in that said continuous concealed markings consist of a helix (38 or 41) arranged, by helically wrapping or winding a thin metal ribbon or thread, between two components of the long, flexible article.

15. Means for the linear marking of length, speed or positioning according to either of claims 1 or 3, characterised in that said continuous concealed markings consist of a helix (41) arranged, by helically wrapping or winding a ribbon of a conductive polymeric composition, between two components of the long, flexible article.

16. Hose (4), characterised in that it comprises, between two components such as a reinforcing ply (11 or 13) and its inner tube (10), or an intermediate layer (12) or its sheath (15), a means for the linear marking of length, speed or positioning according to any of claims 1 to 9 or 14 or 15, allowing, due to reading by suitable sensors, the management of manufacture thereof, automation of cutting thereof into given lengths and exploitation of the conditions of use thereof on site.

17. Flexible profiles such as billiard table linings (16a or 16b), or seals (20) or wheel chocks (23) or anti-shock profiles (25), characterised in that they comprise, embedded in the thickness of their wall, between two of their components, a means for the linear marking of length, speed or positioning according to any of claims 1 to 11 allowing, due to reading by suitable sensors, the management of manufacture thereof and cutting thereof into given lengths.

18. Multi-layer, composite packaging material characterised in that it comprises, between two layers, a means for the marking of length, speed or positioning according to any of claims 1 to 11, allowing, due to reading by suitable sensors, automatic control of the equipment for manufacture of flexible containers or of bending or cutting machines.

## Patentansprüche

1. Mittel zur linearen Markierung der Länge, Geschwindigkeit oder Lage, dadurch gekennzeichnet, daß es aus verdeckten Marken (14a), (14b), (34), (35), (36a), (36b), (38), (41), (45) oder (54) besteht, die in die Wandstärke eines biegsamen Gegenstandes großer Länge aus Verbundmaterial mit prismatischer oder zylindrischer Form eingelassen sind, um beim Erfassen durch passende Detektoren eine Störung des festgestellten dynamischen Magnetfeldes zu bewirken.

2. Lineares Markierungsmittel für die Länge, Geschwindigkeit oder Lage nach Anspruch 1, dadurch gekennzeichnet, daß die verdeckten Marken (14a), (14b), (34), (35), (36a) oder (36b), (45) oder (54) diskontinuierlich sind.

3. Lineares Markierungsmittel für die Länge, Geschwindigkeit oder Lage nach Anspruch 1, dadurch gekennzeichnet, daß die verdeckten Marken (38) oder (41) durchlaufend sind.

4. Lineares Markierungsmittel für die Länge, Geschwindigkeit oder Lage nach einem der Ansprüche 1 oder 2, dadurch gekennzeichnet, daß die verdeckten diskontinuierlichen Marken metallische Halbmonde geringer Dicke sind, die in Längsrichtung zwischen zwei Bestandteilen des biegsamen Gegenstandes großer Länge angeordnet sind.

5. Lineares Markierungsmittel für die Länge, Geschwindigkeit oder Lage nach Anspruch 1 oder 2, dadurch gekennzeichnet, daß die verdeckten diskontinuierlichen Marken aus Pastillen (14b) bestehen, die aus polymerer Zusammensetzung mit einer Beladung leitender Partikel hergestellt sind und in Längsrichtung zwischen zwei Bestandteilen des biegsamen Gegenstandes großer Länge angeordnet sind.

6. Lineares Markierungsmittel für die Länge, Geschwindigkeit oder Lage nach Anspruch 1 oder 2, dadurch gekennzeichnet, daß die diskontinuierlichen verdeckten Markierungen aus einzelnen Löchern (45), die gewünschterweise in einen metallischen Film geringer Dicke hergestellt wurden und zwischen zwei Bestandteilen des biegsamen Gegenstandes großer Länge angeordnet sind.

7. Lineares Markierungsmittel für die Länge, Geschwindigkeit oder Lage nach einem der Ansprüche 1 oder 2, dadurch gekennzeichnet, daß die diskontinuierlichen verdeckten Marken aus einzelnen Löchern (45) bestehen, die gewünschterweise in einem Blatt einer polymeren leitenden Zusammensetzung geschaffen wurden und zwischen zwei Bestandteilen des biegsamen Gegenstandes großer Länge angeordnet sind.

8. Lineares Markierungsmittel für die Länge, Geschwindigkeit oder Lage nach einem der Ansprüche 1 oder 2, dadurch gekennzeichnet, daß die diskontinuierlichen verdeckten Markierungen aus metallischen Ringen (36a) geringer Dicke bestehen, die rechtwinkelig zur Achse angeordnet sind und zwischen zwei Bestandteilen des biegsamen Gegenstandes großer Länge eingebettet sind.

9. Lineares Markierungsmittel für die Länge, Geschwindigkeit oder Lage nach einem der Ansprüche 1 oder 2, dadurch gekennzeichnet, daß die diskontinuierlichen verdeckten Marken aus Reifen (36b) bestehen, die aus polymerer Zusammensetzung, beladen mit leitfähigen Teilen hergestellt, rechtwinkelig zur Achse angeordnet und zwischen zwei Bestandteilen des biegsamen Gegenstandes großer Länge eingeschlossen sind.

10. Lineares Markierungsmittel für die Länge, Geschwindigkeit oder Lage nach einem der Ansprüche 1 oder 2, dadurch gekennzeichnet, daß die diskontinierlichen verdeckten Marken aus Querstäben (34) geringer Dicke bestehen und zwischen zwei Bestandteilen des prismatischen biegsamen Gegenstandes großer Länge, dessen gesamte Breite sie einnehmen, eingeschlossen sind.

11. Lineares Markierungsmittel für die Länge, Geschwindigkeit oder Lage nach einem der Ansprüche 1 oder 2, dadurch gekennzeichnet, daß die diskontinuierlichen verdeckten Marken aus Querstreifen (35) bestehen, die zwischen zwei Bestandteilen des prismatischen biegsamen Körpers großer Länge eingeschlossen sind, wobei sie einen Teil seiner Breite einnehmen.

12. Lineares Markierungsmittel für die Länge, Geschwindigkeit oder Lage nach einem der Ansprüche 1 oder 2, dadurch gekennzeichnet, daß die diskontinuierlichen verdeckten Marken aus Querschlitzen (54) bestehen, die gewünschterweise in einen Metallfilm geringer Dicke geschaffen werden, der zwischen zwei Bestandteilen eines prismatischen biegsamen Gegenstandes großer Länge eingeschlossen ist, wobei sich die Querschlitze (54) über die gesamte oder einen Teil der Breite erstrecken.

13. Lineares Markierungsmittel für die Länge, Geschwindigkeit oder Lage nach einem der Ansprüche 1 oder 2, dadurch gekennzeichnet, daß die diskontinuierlichen verdeckten Marken aus Querschlitzen (54) bestehen, die gewünschtermaßen in einem Blatt aus leitfähiger polymerer Zusammensetzung geschaffen worden sind, daß zwischen zwei Bestandteilen des prismatischen biegsamen Gegenstandes großer Länge eingeschlossen ist, wobei sich die Querschlitze (54) über einen Teil oder die ganze Breite erstrecken.

14. Lineares Markierungsmittel für die Länge, Geschwindigkeit oder Lage nach einem der Ansprüche 1 oder 3, dadurch gekennzeichnet, daß die kontinuierlichen verdeckten Marken aus einer Schraube (38) oder (41) bestehen, die durch schraubenförmiges Aufwickeln oder Aufspulen eines dünnen metallischen Fadens oder Bandes zwischen zwei Bestandteilen des biegsamen Gegenstandes großer Länge angeordnet ist.

15. Lineares Markierungsmittel für die Länge, Geschwindigkeit oder Lage nach einem der Ansprüche 1 oder 3, dadurch gekennzeichnet, daß die kontinuierlichen, verdeckten Marken aus einer Schraube (41) bestehen, die durch schraubenförmiges Aufwickeln oder Aufspulen eines Bandes aus leitfähigem polymerem Material zwischen zwei Bestandteilen des biegsamen Gegenstandes großer Länge angeordnet ist.

16. Biegsames Rohr (4), dadurch gekennzeichnet, daß es zwischen zwei Bestandteilen, beispielsweise einer Verstärkungslage (11) oder (13) und seinem Innenrohr (10) oder einer Zwischenschichte (12) oder seiner Umhüllung (15) ein lineares Markierungsmittel für die Länge, Geschwindigkeit oder Lage, gemäß einem der Ansprüche 1 bis 9 oder 14 oder 15 aufweist, was es durch Ablesen mit passenden Meßwertaufnehmern gestattet, den Ablauf seiner Herstellung, das Automatisieren seines Ablängens und die Verwertung dieser Bedingungen bei der Verwendung an Ort und Stelle vorzunehmen.

17. Biegsame Profile, beispielsweise Kantenabdeckungen für Billardtische (16a) oder (16b) oder Dichtungen (20) oder Bremsklötze (23) oder Stoßdämpferprofile (25), dadurch gekennzeichnet, daß sie in ihrer Wanddicke, eingelassen zwischen zwei ihrer Bestandteile ein lineares Markierungsmittel für die Länge, Geschwindigkeit oder Lage gemäß einem der Ansprüche 1 bis 11 aufweisen, was es dank des Ablesens durch passende Meßwertaufnehmer erlaubt, ihre Herstellung und ihre Ablängung zu überwachen.

18. Mehrschichtiges Verbundmaterial für Verpackungen, dadurch gekennzeichnet, daß es zwischen zwei Schichten ein Markierungsmittel für die Länge, Geschwindigkeit oder Lage gemäß einem der Ansprüche 1 bis 11 aufweist, was es dank des Ablesens durch passende Meßwertaufnehmer gestattet, das Zuführen veränderlichen Inhaltes oder die Bedienung der Falt- oder Schneidmaschinen zu automatisieren.
